# EUROPEAN PATENT SPECIFICATION

(11) **EP 3 182 426 B1**
(45) Date of publication and mention of the grant of the patent: **17.06.2020**
(21) Application number: 15201222.5
(22) Date of filing: 18.12.2015
(51) Int. Cl.: H01F 38/30

(54) **CURRENT TRANSFORMER FOR HIGH VOLTAGE GAS INSULATED SWITCHGEAR SUBSTATION**
STROMWANDLER FÜR HOCHSPANNUNGSGASISOLIERTE SCHALTANLAGENUNTERSTATION
TRANSFORMATEUR DE COURANT POUR SOUS-STATION DE COMMUTATION HAUTE TENSION À ISOLATION GAZEUSE

(43) Date of publication of application: 21.06.2017
(73) Proprietor: ABB Schweiz AG, 5400 Baden (CH)
(72) Inventor: Odehnal, Martin, 644 00 Brno (CZ); Belehrad, Lukas, 625 00 Brno (CZ); Michlicek, Petr, 741 01 Novy Jicin (CZ); Liu, Andy-Hai, 361004 Xiamen (CN); Braun, Thomas, 60437 Frankfurt (DE); Holaus, Walter, 8192 Glattfelden (CH)
(74) Representative: Maiwald Patent- und Rechtsanwaltsgesellschaft mbH

(56) References cited:
- CH-A- 514 923
- DE-A1- 2 242 958
- DE-A1- 2 524 547
- DE-U- 1 983 585
- DE-U1- 8 904 684
- FR-A1- 2 230 052

## Description

The invention relates to a current transformer arrangement for high voltage gas insulated switchgear substation, wherein the current transformer is arranged in a enclosure of housing, according to the preamble of claim 1.

Known current transformer for high voltage gas insulated switchgear substation are located outside or the SF6 (sulfurhexafluoride) gas insulation area of high voltage switchgear substations.

Standard known current transformer enclosed by metal sheet as protection has lower IP protection and environment protection due to mechanical component sealed by silicone. More components are used and more space is necessary, which can be used for active parts. The transformer body has to be screwed to the GIS flanges to fix current transformers on GIS components that lead to shorter assembly time, lower cost and better manipulation.

DE 25 24 547 A1 discloses a current transformer located on a metal tube, which are covered by an insulating housing. Each components of the current transformer are located inside this insulating housing.

So the object of the invention is, to enhance the protection of current transformers in high voltage gas insulated switchgears.

The invention is, that the current transformer is embedded by vacuum casting resin outside of a metal tube (2), in such, that a primary conductor of the current transformer is located in the middle of a metal assembly and sealed by insulation gas SF₆, and that on the metal tube (2) are fixed coils by polyurethane and centered, and that a further secondary box (1*) is casted resin of insulating material sidely on the casted resin of the metal tube (2), in order to contain secondary side elements of the current transformer, and that the secondary box (1*) is also made by epoxy and protecting SF₆-leakage.

In a further advantageous embodiment, the metal tube is made of aluminum.

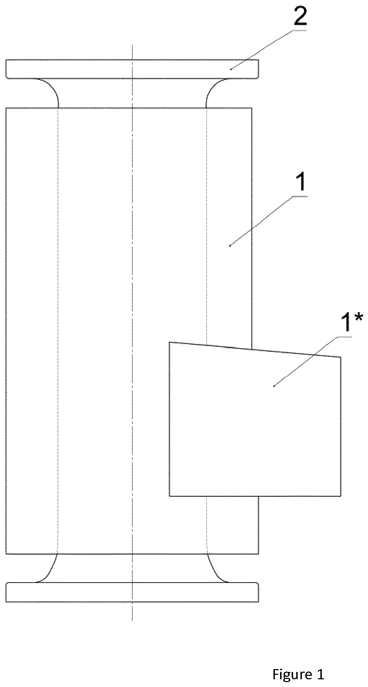

An embodiment of the invention is shown in figure 1.

A current transformer is formed by vacuum casting of epoxy resin 1 outside of an metal tube made of two aluminum tubes 2 which are connected by pressing and with the use of an insulation tube. The primary conductor of the current transformer is located in the middle of the aforesaid aluminum assembly and is sealed by SF6 gas. On the aluminum tubes 2 are fixed coils by polyurethane which are arranged there in a centered way. This allows to cast epoxy resin from all sides and create the secondary box 1*, which is then also made by epoxy. In the secondary box are arranged the secondary parts of the current transformer. The epoxy resin is creating the final design, increasing protection of SF6 leakage and generally is protecting coils and secondary side against to the environment.

## Claims

1. Current transformer arrangement for high voltage gas insulated switchgear substation,
wherein the current transformer is arranged in an enclosure of housing,
**characterized in**
**that** the current transformer is embedded by vacuum casting resin outside of a metal tube (2) of a metal tube assembly, in such, that a primary
conductor of the current transformer is located in the middle of the metal
assembly and sealed by Insulation gas SF₆, and that on the metal tube (2) are fixed secondary coils by polyurethane and centered, and that a secondary box (1*) is casted resin of insulating material sidely on the casted resin of the metal tube (2), in order to contain secondary side elements of the current transformer, and that the secondary box (1*) is also made by epoxy and protecting SF₆-leakage.

2. Current transformer arrangement for high voltage gas insulated switchgear substation,
wherein the current transformer is arranged in an enclosure of housing, as claimed in claim 1,
**characterized in**
**that** the metal tube is made of aluminum.

## Patentansprüche

1. Stromtransformatoranordnung für eine gasisolierte Hochspannungsschaltanlagensubstation, wobei der Stromtransformator in einer Umhüllung eines Gehäuses angeordnet ist,
**dadurch gekennzeichnet,**
**dass** der Stromtransformator durch ein vakuumgegossenes Harz außerhalb eines Metallrohrs (2) einer Metallrohrbaugruppe eingebettet ist, so dass sich ein Primärleiter des Stromtransformators in der Mitte der Metallbaugruppe befindet und durch ein Isolationsgas SF₆ versiegelt ist, und dass an dem Metallrohr (2) Sekundärspulen durch Polyurethan fixiert und zentriert sind, und dass ein Sekundärkasten (1*) ein gegossenes Harz aus Isolationsmaterial seitlich an dem gegossenen Harz des Metallrohrs (2) ist, um Sekundärseitenelemente des Stromtransformators zu enthalten, und dass der Sekundärkasten (1*) ebenfalls durch Epoxid gefertigt ist und vor einem SF₆-Leckverlust schützt.

2. Stromtransformatoranordnung für eine gasisolierte Hochspannungsschaltanlagensubstation, wobei der Stromtransformator in einer Umhüllung eines Gehäuses angeordnet ist, nach Anspruch 1,
**dadurch gekennzeichnet,**
**dass** das Metallrohr aus Aluminium gefertigt ist.

## Revendications

1. Agencement de transformateur de courant pour une sous-station de commutation à haute tension isolée par un gaz, le transformateur de courant étant agencé dans une enceinte de boîtier, **caractérisé en ce que** le transformateur de courant est incorporé en moulant sous vide une résine à l'extérieur d'un tube métallique (2) d'un assemblage de tubes métalliques, de sorte qu'un conducteur primaire du transformateur de courant est localisé au milieu de l'assemblage métallique et scellé par un gaz d'isolation SF₆, et que sur le tube métallique (2) sont fixées des bobines secondaires par un polyuréthane et centrées, et qu'une boîte secondaire (1*) est moulée avec une résine de matériau d'isolation de manière latérale sur la résine moulée du tube métallique (2), afin de contenir des éléments latéraux secondaires du transformateur de courant, et que la boîte secondaire (1*) est également composée d'époxy et protège contre une fuite de SF₆.

2. Agencement de transformateur de courant pour une sous-station de commutation à haute tension isolée par un gaz, le transformateur de courant étant agencé dans une enceinte de boîtier, selon la revendication 1, **caractérisé en ce que** le tube métallique est composé d'aluminium.
